# FASCICULE DE BREVET EUROPEEN

(11) **EP 2 215 801 B1**
(45) Date de publication et mention de la délivrance du brevet: **13.04.2011**
(21) Numéro de dépôt: 08853480.5
(22) Date de dépôt: 27.11.2008
(51) Int. Cl.: H04L 29/06, H04L 12/22

(54) **PROCEDE DE SECURISATION D'UN CANAL BIDIRECTIONNEL DE COMMUNICATION ET DISPOSITIF DE MISE EN OEUVRE DU PROCEDE.**
VERFAHREN ZUR SICHERUNG EINES BIDIREKTIONALEN KOMMUNIKATIONSKANALS UND VORRICHTUNG ZUR UMSETZUNG DIESES VERFAHRENS
METHOD FOR SECURING A BI-DIRECTIONAL COMMUNICATION CHANNEL AND DEVICE FOR IMPLEMENTING SAID METHOD

(30) Priorité: 30.11.2007 FR 0708397
(43) Date de publication de la demande: 11.08.2010
(73) Titulaire: THALES, 92200 Neuilly-sur-Seine (FR)
(72) Inventeur: BRETON, Sébastien, F-92700 Colombes (FR); CAPPY, Dominique, F-78150 Le Chesnay (FR); EUZENAT, Jean-Yves, F-78350 Jouy-en-Josas (FR)
(74) Mandataire: Lucas, Laurent Jacques
(86) Numéro de dépôt international: PCT/EP2008/066316
(87) Numéro de publication internationale: WO 2009/068603

(56) Documents cités:
- US-A1- 2004 260 810
- US-A1- 2006 020 800
- US-A1- 2006 123 482

## Description

La présente invention concerne un procédé de sécurisation d'un canal bidirectionnel de communication et un dispositif de mise en oeuvre du procédé. L'invention permet notamment d'établir des communications entre plusieurs réseaux de niveaux de sécurité différents.

Les normes de sécurité concernant les communications entre des réseaux de niveaux de sécurité différents imposent souvent des contraintes contradictoires avec les exigences d'interopérabilité entre lesdits réseaux, mais aussi avec les performances souhaitées en termes de transport de données.

A titre d'illustration, un réseau interne d'entreprise est autorisé à recevoir certaines données d'un réseau externe, mais aucune donnée du réseau interne ne doit transiter en clair vers le réseau externe. Ainsi, par exemple, lorsque deux réseaux d'entreprise communiquant via un réseau intermédiaire public - par exemple, Internet - souhaitent échanger des informations confidentielles, un dispositif de chiffrement/déchiffrement est placé en sortie de chacun de ces réseaux d'entreprise. Toutes les données sont chiffrées en sortie du réseau d'entreprise émetteur, ces données étant déchiffrées par le réseau d'entreprise récepteur, de telle sorte qu'aucune donnée issue d'un réseau d'entreprise ne transite en clair sur le réseau intermédiaire public.

Or, d'une part, pour pouvoir transférer des données dans le sens montant - du réseau externe vers le réseau interne de l'entreprise, autrement dit, d'un réseau de faible sensibilité vers un réseau de niveau de sensibilité plus élevé -, les protocoles de transport de données nécessitent généralement des émissions de données dans le sens descendant - du réseau interne vers le réseau externe -. En effet, en plus des données utiles à acheminer (ensemble de données souvent qualifié de « plan de trafic utilisateur »), il existe des données de signalisation et de contrôle, inhérentes à la gestion du transport de données par le protocole, ces données devant transiter à la fois dans le sens montant et dans le sens descendant. Les données de signalisation et de contrôle, qui existent notamment pour les protocoles IP (Internet Protocol) et Ethernet, sont par exemple, des acquittements de réception ou des marqueurs de priorité afin de gérer une qualité de service sur des sessions de transmissions de données. D'autre part, le traitement appliqué aux données (un chiffrement total) est identique quelle que soit leur nature, ce qui, dans un contexte de développement des canaux de communications multimédias rassemblant voix, données ou encore vidéos, devient de plus en plus gênant.

Aussi, pour bénéficier de certains services de base tels que la gestion de la qualité de service, il est nécessaire d'établir un canal de communication bidirectionnel, chiffré ou non, autorisant les données de signalisation et/ou de contrôle à transiter entre les réseaux protégés et le réseau intermédiaire public.

Par ailleurs, l'absence de moyens permettant d'échanger de manière sécurisée des données entre des réseaux de niveaux de sécurité différents induit également des duplications d'équipements et de moyens de gestion associés. Par exemple, chaque réseau doit comprendre un serveur de noms de domaines, un serveur d'heure universelle ou tout autre type de service a priori a-confidentiel, essentiel à son fonctionnement. De plus, le diagnostic de l'état du réseau public ne peut pas être effectué à travers les dispositifs de chiffrement/déchiffrement. Par exemple, il est impossible de signaler à un réseau public, un incident survenu sur le réseau protégé, une simple alarme de dysfonctionnement, intrinsèquement non confidentielle, ne pouvant pas être transmise du réseau protégé vers un réseau de niveau de protection plus faible.

Une solution alternative consiste à autoriser certains types de données choisis à transiter en clair et sans contrôle à travers le réseau public, autrement dit, créer un canal de communication supplémentaire pour certains types de données. Mais cette solution comporte des risques, un attaquant pouvant exploiter ce canal pour faire fuir des informations d'un réseau protégé. Le document US 2006/0020800 décrit un système pour transférer des données entre des réseaux avec différents niveaux de sécurité. Les données sont analysées à l'interface réseau et comparés avec une base de données contenant des types de données autorisées et leurs politiques de sécurité.

Un but de l'invention est proposer des moyens pour améliorer l'interopérabilité entre des réseaux de niveaux de sécurité différents, tout en limitant les risques de compromission de données sensibles. A cet effet, l'invention a pour objet un procédé de sécurisation d'un canal de communication bidirectionnel entre au moins un réseau N1 et un réseau N2 d'un niveau de sécurité plus faible que N1, caractérisé en ce qu'il comporte au moins les étapes suivantes :
- définir un ou plusieurs types de données autorisés à transiter de N1 vers N2;
- pour une donnée transmise de N1 vers N2 :
   - si la donnée est d'un type autorisé à transiter entre N1 et N2, aiguiller la donnée vers une première étape de filtrage, sinon aiguiller la donnée vers une étape de chiffrement ,
   - si la donnée est aiguillée vers la première étape de filtrage :
      o sauvegarder le contexte associé à cette donnée,
      o appliquer un ou plusieurs filtres d'analyse sur la donnée pour parer la création d'un canal de communication caché,
   - pour une donnée transmise de N2 vers N1 :
      - si la donnée est d'un type autorisé à transiter entre N1 et N2, aiguiller la donnée vers une deuxième étape de filtrage, sinon aiguiller la donnée vers une étape de déchiffrement ;
      - si la donnée est dirigée vers la deuxième étape de filtrage :
         o comparer le contexte de la donnée au contexte sauvegardé lors de la première étape de filtrage et bloquer la donnée si les contextes sont incohérents,
         o sinon, appliquer un ou plusieurs filtres d'analyse sur la donnée.

Selon un mode de réalisation, l'étape de filtrage comporte une phase d'analyse syntaxique des données, ladite phase contrôlant la validité du format de la donnée en fonction du protocole utilisé pour la transmission de cette donnée.

Selon un mode de réalisation, l'étape de filtrage comporte une phase d'analyse sémantique des données, ladite phase contrôlant la cohérence des réponses émises du réseau N2 vers le réseau N1 vis à vis des requêtes émises par le réseau N1 vers le réseau N2.

Selon un mode de réalisation, l'étape de filtrage comporte une phase d'analyse comportementale des données, ladite phase évaluant la probabilité d'innocuité des échanges de données entre le réseau N1 et le réseau N2 vis à vis de scénarii prédéfinis d'interconnexion entre ces deux réseaux, un scénario d'interconnexion définissant, à partir des états de l'automate du protocole de transmission des données, des durées attendues de transition entre ces états.

Selon un mode de réalisation, l'étape de filtrage comporte une phase de retranscription d'une donnée formatée par un premier protocole pour la retraduire dans une donnée formatée par un deuxième protocole.

L'invention a également pour objet un dispositif pour établir un canal de communication bidirectionnel entre au moins un premier réseau N1 et un deuxième réseau N2 de niveau de sécurité plus faible que N1, le dispositif comprenant un module de chiffrement et un module de déchiffrement, le dispositif comportant au moins un premier module d'aiguillage, un deuxième module d'aiguillage et un module de filtrage, le premier module d'aiguillage orientant les paquets de données issus du premier réseau N1, soit vers le module de chiffrement, soit vers le module de filtrage, le deuxième module d'aiguillage orientant les paquets de données issus du deuxième réseau N2, soit vers le module de déchiffrement, soit vers le module de filtrage, le module de filtrage mettant en oeuvre le procédé tel que décrit plus haut.

D'autres caractéristiques apparaîtront à la lecture de la description détaillée donnée à titre d'exemple et non limitative qui suit faite en regard de dessins annexés qui représentent :
- la figure 1, un synoptique illustrant les étapes de transit d'une donnée d'un premier réseau vers un deuxième réseau d'un niveau de sécurité inférieur au premier en appliquant un procédé de sécurisation selon l'invention (sens descendant) ;
- la figure 2, un synoptique illustrant les étapes de transit d'une donnée entre les mêmes réseaux que la figure 1, mais dans le sens opposé, en appliquant un procédé de sécurisation selon l'invention (sens montant) ;
- la figure 3, un exemple d'architecture d'un dispositif mettant en oeuvre le procédé de sécurisation selon l'invention ;
- la figure 4, un synoptique illustrant l'utilisation d'un dispositif de sécurisation selon l'invention pour permettre à deux réseaux protégés de communiquer entre-eux via un réseau public intermédiaire.

Par souci de clarté, les éléments portant les mêmes références dans des figures différentes sont les mêmes.

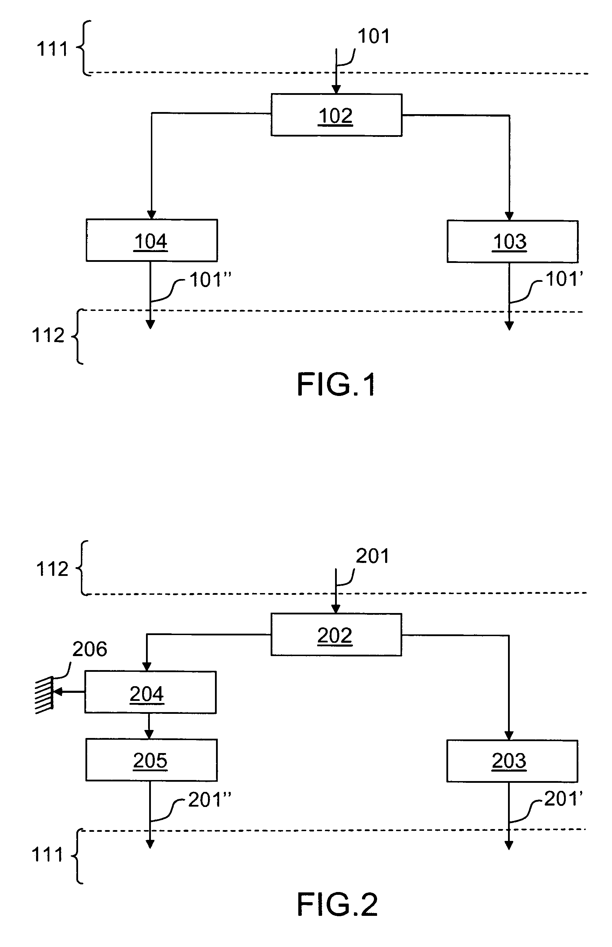

La figure 1 présente un synoptique illustrant les étapes de transit d'une donnée d'un premier réseau 111 vers un deuxième réseau 112 d'un niveau de sécurité inférieur au premier en appliquant un procédé de sécurisation selon l'invention.

Dans un premier temps, une donnée 101 issue du premier réseau 111 est reçue par un module d'aiguillage 102, lequel oriente ladite donnée 101, soit vers une étape de chiffrement 103, soit vers une étape de filtrage 104. La décision de transmettre la donnée vers l'une ou l'autre de ces deux étapes 103, 104 est prise par le module d'aiguillage 102 en fonction de la nature de cette donnée 101. La nature de la donnée 101 est déterminée, par exemple, grâce à une analyse des métadonnées qui lui sont associées par le protocole de transport. Par exemple, les métadonnées du protocole IP relatives à la couche 3 du modèle OSI (≪ Open System Interconnection ≫), comme l'adresse IP de l'émetteur et/ou du destinataire ou le port de communication employé, sont examinées pour déterminer vers quelle étape 103, 104 le module d'aiguillage 102 doit orienter la donnée 101. En effet, dans l'exemple, certaines adresses et/ou ports de communication sont associés à des services autorisés à faire transiter des informations via un autre canal de communication à travers le deuxième réseau 112, les autres adresses et/ou ports de communication étant dédiés à des transferts d'informations sensibles, donc nécessitant un chiffrement systématique.

Par exemple, une requête émise par le premier réseau 111 à destination d'un serveur de noms de domaines situé sur le deuxième réseau 112 est orientée vers l'étape de filtrage 104 et non vers l'étape de chiffrement 103, car les données contenues dans cette requête peuvent ne pas être considérées comme sensibles. L'exemple peut être étendu à une multitude de services - par exemple, des services de réservation de ressources en bande passante, des annuaires, des serveurs de temps universel - en fonction, notamment, des contraintes de sécurité relatives aux réseaux concernés. Le procédé peut être donc vu comme un procédé de chiffrement à opacité contrôlée, le niveau d'opacité étant configuré selon la proportion de services autorisés à transmettre des informations via l'étape de filtrage 104 et selon le contexte d'emploi et du niveau de menaces associées. L'opacité est naturellement maintenue à un niveau élevé pour les réseaux nécessitant des niveaux de protection élevés. Le cas classique du chiffrement total peut d'ailleurs être obtenu en n'autorisant aucune transmission via l'étape de filtrage 104, autrement dit en imposant au module d'aiguillage 102 d'orienter les données reçues systématiquement vers l'étape de chiffrement 103.

Néanmoins, l'autorisation de faire transiter des données entre des réseaux de niveaux de sécurité différents doit être accompagnée de mesures de sécurisation. En effet, il est possible de détourner une communication d'apparence anodine aux fins de création d'un canal de communication caché ou auxiliaire. Notamment, pour une série de paquets de données, chaque paquet pris séparément peut ne pas contenir d'information sensible, tandis que la succession de ces paquets peut aboutir à la création un code de communication. Par exemple, lors de l'émission d'une série de requêtes de même nature du premier réseau 111 vers le deuxième réseau 112, la présence d'un intervalle temporel plus ou moins long entre chaque requête peut constituer un code exploitable pour faire fuir des informations vers l'extérieur du premier réseau 111. Dans le cas, par exemple, d'un marquage de paquets aux fins de gérer la qualité de service dans l'acheminement desdits paquets, une variation anormale de la valeur du marqueur de qualité de service au cours de l'émission d'une succession de paquets peut également constituer un canal de communication caché.

Dans un deuxième temps, si la donnée est orientée vers une étape de chiffrement 103, la donnée chiffrée 101' produite par la dite étape est émise vers le deuxième réseau 112 ; si la donnée est orientée vers l'étape de filtrage 104, elle subit un traitement visant à contrecarrer toute tentative de création par un attaquant d'un canal de communication caché. La donnée 101 " résultante de ce traitement est donc une donnée filtrée et épurée des éventuels canaux auxiliaires résultants. Le traitement de l'étape de filtrage 104 comporte, dans l'exemple, une phase d'analyse syntaxique, une phase d'analyse sémantique et une phase d'analyse comportementale. La nature de la donnée est tout d'abord déterminée pour initialiser les paramètres de chacune des phases d'analyse.

L'analyse syntaxique vérifie que la donnée à transmettre respecte scrupuleusement les standards, par exemple les documents RFC (≪ Request For Comments ≫) ou la norme du protocole utilisé, et qu'aucun champ n'est détourné de son objet. Notamment, les anomalies dans les valeurs des champs sont détectées. Par exemple, dans le cas d'une requête DNS (≪ Domain Name System ≫), il convient de s'assurer que le nom d'hôte à résoudre respecte le format décrit par les RFC 1034 et 1035. En particulier, étant donné que nom d'hôte à résoudre est indépendant de la casse, c'est à dire des minuscules ou majuscules, l'étape de filtrage 104 pourra alors, selon un mode de réalisation, réécrire la requête soit en majuscule, soit en minuscule, ou encore en combinant les deux afin de réduire les canaux cachés sur la typographie utilisée.

L'analyse sémantique remplit plusieurs fonctions. D'une part, elle vérifie l'automate des états possibles pour un protocole donné et la cohérence des enchaînements desdits états. D'autre part, l'analyse sémantique détecte un éventuel sens caché dissimulé dans une requête ou une réponse à cette requête. En outre, l'analyse sémantique gère les contextes de connexion qui permettent de garantir qu'une réponse provenant du deuxième réseau 112 de moindre sensibilité est effectivement associée à une requête active émise depuis le premier réseau 111 de plus haute sensibilité.

Selon un mode de réalisation, en plus de s'assurer que la réponse correspond à un contexte actif qui, par exemple, peut être défini par un couple (adresse IP source - port source ; adresse IP destination - port destination), l'analyse sémantique vérifie que la réponse fait sens, c'est-à-dire que la réponse correspond à des cas de réponses vraisemblables au niveau du protocole. Si l'on prend l'exemple d'une requête DNS (« Domain Name System ») émise par le premier réseau 111 vers un serveur DNS présent sur le deuxième réseau 112, il n'y a qu'une seule réponse attendue de la part du premier réseau 111. De plus, cette réponse doit être cohérente avec la requête émise. Si la requête DNS vise à obtenir la résolution du nom d'un hôte, la phase d'analyse sémantique doit vérifier que la réponse obtenue est cohérente avec la requête posée (si la résolution réussit, on doit obtenir ici l'adresse IP de l'hôte résolu) et, par exemple, que l'adresse IP obtenue correspond à un hôte effectivement joignable, c'est-à-dire accessible par un simple routage IP.

L'analyse comportementale est, de préférence, exécutée après les phases d'analyse syntaxique et sémantique susmentionnées. La phase d'analyse comportementale s'appuie sur un schéma cognitif, c'est-à-dire sur une structure qui vise à donner un sens à un processus d'échange d'information. Pour illustrer cette nouvelle approche dans les analyses de filtrage, on peut s'appuyer sur des canevas vraisemblables de scénarii d'interconnexion, où chaque scénario pourrait correspondre à un usage prédéterminé d'un protocole donné en prenant en compte à la fois les aspects séquentiels mais aussi les aspects temporels des communications. Un échantillonnage statistique peut par exemple être exécuté pour contrôler le volume de données transitant entre le premier réseau 111 et le deuxième réseau 112, pour un protocole choisi et pendant une certaine période temporelle. Un volume de donnée anormalement élevé peut alors indiquer une attaque. De même, les espaces temporels entre une première transmission de données du premier réseau 111 vers le deuxième réseau 112 et une deuxième transmission de données entre lesdits réseaux peuvent être analysés. Ainsi, au cours d'échanges de données via un protocole, si la transition entre deux états de l'automate du protocole est d'une durée anormalement courte ou élevée par rapport aux durées attendues, un indice d'attaque est levé.

Par exemple, il est tout à fait acceptable, dans le cas d'une analyse des requêtes de type DNS, qu'un même usager envoie plusieurs fois de suite des requêtes DNS visant à résoudre plusieurs noms de domaines, même dans un laps de temps très court. Par contre, si ce même utilisateur, identifié, par exemple, par son adresse IP source, venait à envoyer plusieurs fois de suite des requêtes visant à résoudre l'adresse IP d'un même hôte DNS dans un laps de temps inférieur à la durée de son cache DNS, alors il y aurait suspicion d'acte malveillant car son poste de travail devrait normalement conserver l'adresse IP résolue pendant une durée définie paramétrable (en général quelques minutes). Pour limiter les fausses alarmes, il est conseillé de définir des seuils paramétrables à partir desquels il est recommandé de lever des alertes. Dans un autre exemple relatif à une analyse comportementale dédiée aux requêtes DHCP (≪ Dynamic Host Configuration Protocol ≫, permettant l'attribution d'une adresse IP pour un bail limité), il est tout à fait acceptable qu'un hôte client, identifié par exemple par son adresse MAC (Ethernet) envoie une requête DHCP plusieurs fois par jour pour obtenir une adresse IP (en prenant en compte, par exemple, les multiples débranchements du câble réseau), alors qu'un hôte serveur ne fera la requête qu'une seule fois, puis lors du renouvellement de son bail ou lors de son redémarrage.

Lorsqu'une anomalie est détectée, la donnée n'est pas transmise vers le deuxième réseau 112. D'autres traitements sont possibles lors de la détection d'une anomalie. Par exemple, une alarme peut être levée pour interdire les données de même nature que la donnée concernée par l'anomalie à transiter entre les réseaux de sensibilités différentes. Ceci peut être effectué en modifiant la configuration du module d'aiguillage 102.

Selon un autre mode de réalisation, l'étape de filtrage 104 exécute seulement une partie des phases d'analyse précitées, par exemple, uniquement les phases d'analyse syntaxique et d'analyse sémantique.

Selon un mode de réalisation, l'étape de filtrage 104 met de plus, en oeuvre une étape de retranscription des données pour diminuer les risques de fuite d'information du premier réseau 111. Ainsi, dans le cas d'une série de requêtes (par exemple des requêtes SIP, acronyme pour « Session Initialization Protocol ≫) émises par le premier réseau 111, certaines requêtes de ladite série sont reformulées dans le format d'un autre protocole aux fonctions analogues (par exemple, les requêtes SIP sont retraduites en requêtes de type H.323), pour éliminer les informations redondantes et/ou varier le format de la requête, permettant ainsi d'augmenter les difficultés de création d'un canal de communication caché.

La figure 2 présente un synoptique illustrant les étapes de transit d'une donnée entre les mêmes réseaux que la figure 1, mais dans le sens opposé. La donnée 201 est transmise du deuxième réseau 112 vers le premier réseau 111, lequel est d'un niveau de sécurité supérieur au deuxième, en appliquant un procédé de sécurisation selon l'invention.

Dans un premier temps, la donnée 201 est reçue par un module d'aiguillage 202 qui l'oriente, soit vers une étape de déchiffrement 203, soit vers une étape de vérification de contexte 204.

Si la donnée 201 est chiffrée (s'il s'agit, par exemple, d'une donnée transportée par les protocoles de type IPSec (≪ Internet Protocol Security ≫), la donnée 201 est orientée vers l'étape de déchiffrement 203. Si le déchiffrement se déroule correctement, la donnée déchiffrée 201' issue de cette étape de déchiffrement 203 est ensuite émise vers le premier réseau 111.

Dans le cas contraire, si la donnée 201 n'est pas chiffrée, elle est orientée vers l'étape de vérification de contexte 204. Cette étape analyse le contexte de la donnée en regard des paramètres du contexte sauvegardé lors de l'étape de filtrage 104 (figure 1). Il s'agit, par exemple, de vérifications sur les champs relatifs à la couche 3 du modèle OSI, comme par exemple, la vérification d'un champ DSCP (« Differentiated Services Code Point ») utilisé pour la gestion de la qualité de service, ou la vérification d'une taille MTU (« Maximum Transmission Unit ») et des variations de taille de MTU autorisées. Il peut s'agir également de vérifications au niveau de la couche applicative (couche 7 du modèle OSI), par exemple pour analyser des requêtes de réservation de ressources RSVP (« Resource ReSerVation Protocol ») ou des requêtes DNS. Si le contexte est incohérent avec le contexte préalablement enregistré lors de l'étape de filtrage 104, alors la donnée est bloquée, 206, et une alarme peut être levée. Par exemple, si une réponse est reçue du deuxième réseau 112 alors qu'aucune requête n'avait été émise par le premier réseau 111 vers le deuxième réseau 112 (aucun contexte n'avait été créé), cette réponse est bloquée. Sinon, si le contexte est cohérent avec le contexte enregistré, la donnée 201 est transmise à une étape de filtrage 205, laquelle applique les phases d'analyse mentionnées plus haut pour la figure 1.

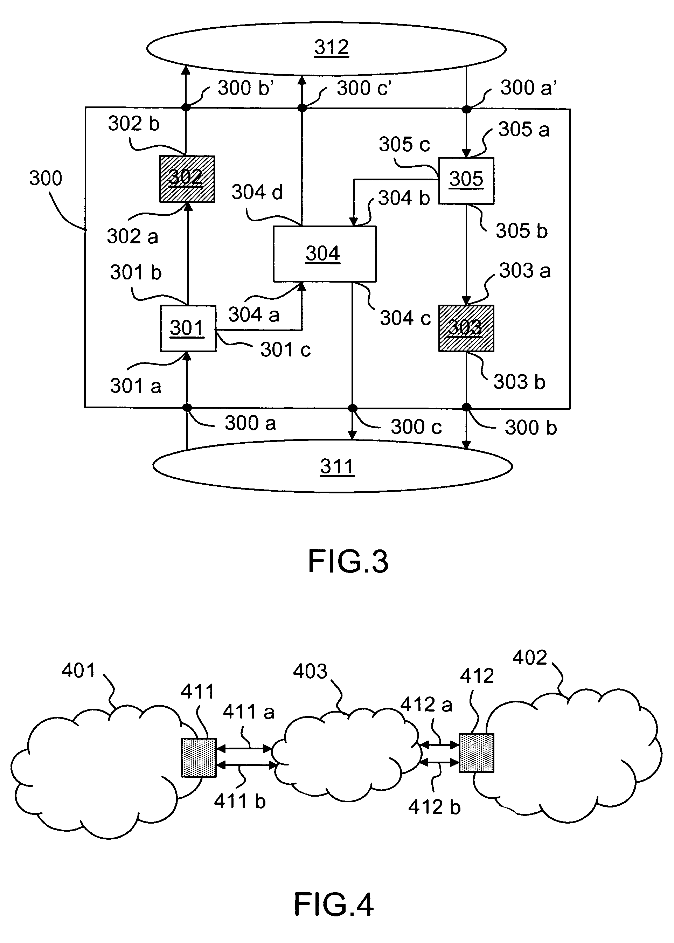

La figure 3 présente un exemple d'architecture d'un dispositif mettant en oeuvre le procédé selon l'invention. Le dispositif 300 est installé en coupure entre un réseau confidentiel 311 et un réseau public 312. Il comporte un premier module d'aiguillage 301, un module de chiffrement 302, un module de déchiffrement 303, un module de filtrage 304 et un deuxième module d'aiguillage 305.

Le dispositif 300 comporte une première entrée 300a reliée au réseau confidentiel 311, deuxième entrée 300a' reliée au réseau public 312, une première sortie 300b et une deuxième sortie 300c reliées au réseau confidentiel 311, une troisième sortie 300b' et une quatrième sortie 300c' reliées au réseau public 312.

Le premier module d'aiguillage 301 comprend une entrée 301 a et deux sorties 301 b, 301 c, son entrée 301a étant connectée à la première entrée 300a du dispositif 300. Le deuxième module d'aiguillage 305 comprend une entrée 305a et deux sorties 305b, 305c, son entrée 305a étant connectée à la deuxième entrée 300a' du dispositif 300.

Le module de chiffrement 302 comprend une entrée 302a, connectée à la première sortie 301 b du premier module d'aiguillage 301, et une sortie 302b connectée à la troisième sortie 300b' du dispositif 300. Le module de déchiffrement 303 comprend une entrée 303a, connectée à la première sortie 305b du deuxième module d'aiguillage 305, et une sortie 303b connectée à la première sortie 300b du dispositif 300. Les modules de chiffrement 302 et de déchiffrement 303 s'appuient sur les techniques classiques de cryptographie.

Le module de filtrage 304 comprend deux entrées 304a, 304b et deux sorties 304c, 304d, sa première entrée 304a étant connectée à la deuxième sortie 301 c du premier module d'aiguillage 301, sa deuxième entrée 304b étant connectée à la deuxième sortie 305c du deuxième module d'aiguillage 305, sa première sortie 304c étant connectée à la deuxième sortie 300c du dispositif 300, et sa deuxième sortie 304d étant connectée à la quatrième sortie 300c' du dispositif 300.

Le module de filtrage 304 s'appuie notamment sur une base de données de filtres, chaque filtre correspondant à un type de données à contrôler. Chaque filtre met en oeuvre une ou plusieurs phases d'analyse de l'étape de filtrage 104 (figure 1). Un filtre est formé, par exemple, d'un ensemble de paramètres et/ou de composants logiciels. Lorsque la nature de la donnée a été identifiée, les paramètres et, éventuellement les composants logiciels, correspondant à la nature de la donnée à contrôler sont chargés et exécutés par le module de filtrage 304.

Par exemple, la base de données comprend un filtre pour contrôler les requêtes DHCP, un filtre pour les requêtes DNS, et un filtre pour les demandes de réservation de ressources du protocole RSVP (« Resource ReSerVation Protocol »). Aussi, une architecture ouverte et modulaire est fortement souhaitable, une telle architecture permettant d'intégrer un nouveau filtre et/ou de retirer un filtre de la base de données sans affecter le fonctionnement des autres filtres. Ainsi, les homologations de sécurité peuvent être opérées filtre par filtre, seul un filtre homologué étant intégré dans la base de données des filtres. Selon un autre mode de réalisation, certains filtres sont réalisés par circuits électroniques, sur composants programmables par exemple.

Par ailleurs, le dispositif de sécurisation 300 est préférablement installé dans un espace contrôlé, par exemple dans l'enceinte du réseau confidentiel 311, afin de protéger physiquement sa deuxième entrée 300a' et sa deuxième sortie 300c contre des attaquants potentiels.

Avantageusement, le dispositif de sécurisation 300 est physiquement blindé, notamment, pour éviter les attaques par canaux auxiliaires, via notamment l'analyse du courant électrique consommé par le dispositif ou le rayonnement électromagnétique émis par le dispositif.

La figure 4 présente un synoptique illustrant l'utilisation d'un dispositif selon l'invention pour permettre à deux réseaux protégés 401, 402 de communiquer entre-eux via un réseau public intermédiaire 403.

Un premier réseau d'entreprise 401 doit communiquer avec un deuxième réseau d'entreprise 402. Ces deux réseaux 401, 402 communiquent via le réseau public 403. Les données présentes sur les deux réseaux d'entreprise 401, 402 étant confidentielles, aucune de ces données ne doit transiter en clair sur le réseau public 403. Une liaison sécurisée est donc établie entre les deux réseaux d'entreprise 401, 402 en plaçant en sortie de chacun d'entre eux un dispositif de sécurisation 411, 412 selon l'invention, de telle sorte que toutes les données entrantes ou sortantes d'un réseau d'entreprise soient soit chiffrées/déchiffrées 411 a, 412a, soit filtrées 411 b, 412b. Le dispositif de sécurisation selon l'invention permet donc d'établir un canal de communication parallèle au canal de communication chiffré classique, ce canal de communication parallèle autorisant une interopérabilité maîtrisée entre un réseau d'entreprise 401, 402 et le réseau public 403.

Dans le cas où les deux réseaux d'entreprise 401, 402 sont déjà liés par une liaison sécurisée classique comprenant un chiffreur en sortie de chaque réseau d'entreprise 401, 402, il suffit généralement de remplacer chaque chiffreur par un dispositif de sécurisation selon l'invention. Ainsi, un des avantages de l'invention est la facilité de sa mise en oeuvre au sein d'une architecture sécurisée déjà existante.

Le dispositif selon l'invention comporte plusieurs avantages. Il permet de mutualiser des équipements et de réduire les équipes ainsi que les opérations d'exploitation et de maintenance. Par ailleurs, en proposant une solution d'échanges maîtrisés de données de signalisation entre des réseaux de différents niveaux de sécurité, il permet d'offrir une plus grande réactivité des réseaux de niveaux de sécurité élevés vis-à-vis des changements de charge ou de topologie des réseaux environnants.

## Revendications

1. Procédé de sécurisation d'un canal de communication bidirectionnel entre au moins un réseau N1 et un réseau N2 d'un niveau de sécurité plus faible que N1, **caractérisé en ce qu'**il comporte les étapes suivantes :
- définir un ou plusieurs types de données autorisés à transiter de N1 vers N2 ;
- pour une donnée transmise de N1 vers N2 :
- si la donnée est d'un type autorisé à transiter entre N1 et N2, aiguiller la donnée vers une première étape de filtrage (104), sinon aiguiller la donnée vers une étape de chiffrement (103),
- si la donnée est aiguillée vers la première étape de filtrage (104) :
o sauvegarder le contexte associé à cette donnée,
o appliquer un ou plusieurs filtres d'analyse sur la donnée pour parer la création d'un canal de communication caché,
- pour une donnée transmise de N2 vers N1 :
- si la donnée est d'un type autorisé à transiter entre N1 et N2, aiguiller la donnée vers une deuxième étape de filtrage (204, 205), sinon aiguiller la donnée vers une étape de déchiffrement (203) ;
- si la donnée est dirigée vers la deuxième étape de filtrage (204, 205) :
o comparer le contexte de la donnée au contexte sauvegardé lors de la première étape de filtrage (104) et bloquer la donnée si les contextes sont incohérents,
o sinon, appliquer un ou plusieurs filtres d'analyse sur la donnée.

2. Procédé de sécurisation selon la revendication 1, **caractérisé en ce que** l'étape de filtrage (104) comporte une phase d'analyse syntaxique des données, ladite phase contrôlant la validité du format de la donnée en fonction du protocole utilisé pour la transmission de cette donnée.

3. Procédé de sécurisation selon l'une des revendications précédentes, **caractérisé en ce que** l'étape de filtrage (104) comporte une phase d'analyse sémantique des données, ladite phase contrôlant la cohérence des réponses émises du réseau N2 vers le réseau N1 vis à vis des requêtes émises par le réseau N1 vers le réseau N2.

4. Procédé de sécurisation selon l'une des revendications précédentes, **caractérisé en ce que** l'étape de filtrage (104) comporte une phase d'analyse comportementale des données, ladite phase évaluant la probabilité d'innocuité des échanges de données entre le réseau N1 et le réseau N2 vis à vis de scénarii prédéfinis d'interconnexion entre ces deux réseaux, un scénario d'interconnexion définissant, à partir des états du ou des automates définis par le protocole de transmission des données, des durées attendues de transition entre ces états.

5. Procédé de sécurisation selon l'une des revendications précédentes, **caractérisé en ce que** l'étape de filtrage (104) comporte une phase de retranscription d'une donnée formatée par un premier protocole pour la retraduire dans une donnée formatée par un deuxième protocole.

6. Dispositif pour établir un canal de communication bidirectionnel entre au moins un premier réseau N1 et un deuxième réseau N2 de niveau de sécurité plus faible que N1, le dispositif comprenant un module de chiffrement (302) et un module de déchiffrement (303), **caractérisé en ce qu'**il comporte au moins un premier module d'aiguillage (301), un deuxième module d'aiguillage (305) et un module de filtrage (304), le premier module d'aiguillage (301) orientant les paquets de données issus du premier réseau N1, soit vers le module de chiffrement (302), soit vers le module de filtrage (304), le deuxième module d'aiguillage (305) orientant les paquets de données issus du deuxième réseau N2, soit vers le module de déchiffrement (303), soit vers le module de filtrage (304), le module de filtrage (304) mettant en oeuvre le procédé de sécurisation selon l'une des revendications précédentes.

## Claims

1. A process for securing a bidirectional communication channel between at least one network N1 and one network N2 with a security level which is lower than N1, **characterised in that** it comprises the following steps:
- defining one or more types of data authorised to pass from N1 to N2;
- for data transmitted from N1 to N2:
- directing the data towards a first filtering step (104), if the data is of a type which is authorised to pass between N1 and N2, otherwise directing the data towards a ciphering step (103),
- if the data is directed towards the first filtering step (104):
o saving the context associated with this data,
o applying one or more analysis filters to the data in order to deal with the creation of a hidden communication channel,
- for data transmitted from N2 to N1:
- directing the data towards a second filtering step (204, 205), if the data is of a type which is authorised to pass between N1 and N2, otherwise directing the data towards a deciphering step (203),
- if the data is directed towards the second filtering step (204, 205):
o comparing the context of the data with the context saved during the first filtering step (104) and blocking the data if the contexts are incoherent,
ο otherwise, applying one or more analysis filters to the data.

2. The securing process according to claim 1, **characterised in that** the filtering step (104) comprises a data syntactic analysis phase, said phase controlling the validity of the data format as a function of the protocol used for the transmission of this data.

3. The securing process according to any one of the previous claims, **characterised in that** the filtering step (104) comprises a data semantic analysis phase, said phase controlling the coherence of the responses emitted from the network N2 to the network N1 with regard to the requests emitted from the network N1 to the network N2.

4. The securing process according to any one of the previous claims, **characterised in that** the filtering step (104) comprises a data behavior analysis phase, said phase assessing the probability of innocuity of data exchanges between the network N1 and the network N2 with regard to predefined interconnection scenarios between these two networks, an interconnection scenario defining, from the states of the one or more controllers defined by the data transmission protocol, expected transition durations between these states.

5. The securing process according to any one of the previous claims, **characterised in that** the filtering step (104) comprises a phase for re-writing the data formatted by a first protocol so that it can be reconverted intro data formatted by a second protocol.

6. A device for establishing a bidirectional communication channel between at least one first network N1 and one second network N2 having a security level which is lower than N1, the device comprising a ciphering module (302) and a deciphering module (303), **characterised in that** it comprises at least one first directing module (301), one second directing module (305) and a filtering module (304), the first directing module (301) orienting the data packets originating from the first network N1 either towards the ciphering module (302) or towards the filtering module (304), the second directing module (305) orienting the data packets originating from the second network N2 either towards the deciphering module (303) or towards the filtering module (304), the filtering module (304) implementing the securing process according to any one of the previous claims.

## Patentansprüche

1. Verfahren zum Sichern eines bidirektionalen Kommunikationskanals zwischen wenigstens einem Netzwerk N1 und einem Netzwerk N2 mit einer Sicherheitsstufe, die niedriger ist als in N1, **dadurch gekennzeichnet, dass** es die folgenden Schritte beinhaltet:
- Definieren von einem oder mehreren Datentypen, die für den Übergang von N1 zu N2 authorisiert sind;
- für von N1 zu N2 gesendete Daten:
- Leiten, wenn die Daten von einem Typ sind, der für den Übergang zwischen N1 und N2 authorisiert ist, der Daten zu einem ersten Filterungsschritt (104), ansonsten Leiten der Daten zu einem Verschlüsselungsschritt (103),
- wenn die Daten zum ersten Filterungsschritt (104) geleitet werden:
o Sichern des mit diesen Daten assoziierten Kontexts,
o Anwenden von einem oder mehreren Analysefiltern auf die Daten, um die Erzeugung eines verborgenen Kommunikationskanals zu bewirken,
- für von N2 zu N 1 gesendete Daten:
- Leiten, wenn die Daten von einem Typ sind, der für den Übergang zwischen N1 und N2 authorisiert ist, der Daten zu einem zweiten Filterungsschritt (204, 205), ansonsten Leiten der Daten zu einem Verschlüsselungsschritt (203),
- wenn die Daten zu dem zweiten Filterungsschritt (204, 205) geleitet werden:
o Vergleichen des Kontexts der Daten mit dem im ersten Filterungsschritt (104) gesicherten Kontext und Sperren der Daten, wenn die Kontexte inkohärent sind,
o ansonsten Anwenden von einem oder mehreren Analysefiltern auf die Daten.

2. Sicherungsverfahren nach Anspruch 1, **dadurch gekennzeichnet, dass** der Filterungsschritt (104) eine syntaktische Datenanalysephase beinhaltet, wobei diese Phase die Gültigkeit des Formats der Daten in Abhängigkeit von dem für die Übertragung dieser Daten verwendeten Protokoll prüft.

3. Sicherungsverfahren nach einem der vorherigen Ansprüche, **dadurch gekennzeichnet, dass** der Filterungsschritt (104) eine semantische Datenanalysephase beinhaltet, wobei diese Phase die Kohärenz der vom Netzwerk N2 zum Netzwerk N1 emittierten Antworten mit Bezug auf die vom Netzwerk N1 zum Netzwerk N2 emittierten Anforderungen prüft.

4. Sicherungsverfahren nach einem der vorherigen Ansprüche, **dadurch gekennzeichnet, dass** der Filterungsschritt (104) eine Datenverhaltensanalysephase beinhaltet, wobei diese Phase die Wahrscheinlichkeit der Unschädlichkeit von Datenaustausch zwischen dem Netzwerk N1 und dem Netzwerk N2 mit Bezug auf das vordefinierte Verbindungsszenario zwischen diesen beiden Netzwerken beurteilt, wobei ein Verbindungsszenario, anhand der Zustände des oder der durch das Datenübertragungsprotokoll definierten Automaten, erwartete Übergangsdauer zwischen diesen beiden Zuständen definiert.

5. Sicherungsverfahren nach einem der vorherigen Ansprüche, **dadurch gekennzeichnet, dass** der Filterungsschritt (104) eine Phase zum Neuschreiben der von einem ersten Protokoll formatierten Daten beinhaltet, so dass sie in von einem zweiten Protokoll formatierte Daten umgewandelt werden können.

6. Gerät zum Aufbauen eines bidirektionalen Kommunikationskanals zwischen wenigstens einem ersten Netzwerk N1 und einem zweiten Netzwerk N2 mit einer Sicherheitsstufe, die niedriger ist als in N1, wobei das Gerät ein Verschlüsselungsmodul (302) und ein Entschlüsselungsmodul (303) umfasst, **dadurch gekennzeichnet, dass** es wenigstens ein erstes Leitmodul (301), ein zweites Leitmodul (305) und ein Filterungsmodul (304) umfasst, wobei das erste Leitmodul (301) die vom ersten Netzwerk N1 kommenden Datenpakete entweder in Richtung des Verschlüsselungsmoduls (302) oder in Richtung des Filterungsmoduls (304) orientiert, wobei das zweite Leitmodul (305) die vom zweiten Netzwerk N2 kommenden Daten entweder in Richtung des Entschlüsselungsmoduls (303) oder in Richtung des Filterungsmoduls (304) orientiert, wobei das Filterungsmodul (304) das Sicherungsverfahren nach einem der vorherigen Ansprüche implementiert.
